# FASCICULE DE BREVET EUROPEEN

(11) **EP 2 075 401 B1**
(45) Date de publication et mention de la délivrance du brevet: **21.10.2015**
(21) Numéro de dépôt: 08172674.7
(22) Date de dépôt: 23.12.2008
(51) Int. Cl.: E04F 10/06, G05B 19/425, E06B 9/68, E06B 9/88

(54) **Procédé de réglage d'une installation de protection solaire motorisée ne comprenant pas de butée franche**
Method of adjusting a motorised solar protection installation not comprising an end-stop.
Einstellverfahren einer motorisierten Sonnenschutzanlage, die keinen Endanschlag umfasst

(30) Priorité: 26.12.2007 FR 0709100
(43) Date de publication de la demande: 01.07.2009
(73) Titulaire: Somfy SAS, 74300 Cluses (FR)
(72) Inventeur: Hoff, Laurent, 74250 Peillonnex (FR); Guillemot, Eric, 74950 Scionzier (FR)
(74) Mandataire: Bugnion Genève

(56) Documents cités:
- EP-A- 0 770 757
- EP-A- 0 905 592

## Description

L'invention concerne le domaine des protections solaires automatisées, en particulier des stores enroulables pilotés par un actionneur. Une toile comprise dans le store est destinée à s'enrouler sur un tube dit tube d'enroulement, la rotation de ce dernier étant réalisée par l'intermédiaire de l'actionneur.

Les actionneurs tubulaires sont couramment utilisés pour ces manoeuvres automatiques. Ils se placent à l'intérieur du tube d'enroulement et permettent de dérouler ou d'enrouler la toile du store sans effort pour l'utilisateur.

Alternativement, l'invention concerne également les stores venant se replier en position haute contre un rail, le mouvement étant piloté par un actionneur agissant sur des cordons ou lacets s'enroulant autour de tambours situés dans le rail.

Associés à des télécommandes, automatismes ou capteurs, le fonctionnement du store peut être réalisé à distance, sans nécessairement l'intervention de l'utilisateur (par exemple, déroulement automatique en présence de soleil, à heure fixe, pour protéger à la fois une terrasse ou des fenêtres d'un trop grand réchauffement l'été, enroulement automatique en cas de vent pour protéger le store lui-même).

Les actionneurs électromécaniques sont généralement connectés sur le secteur pour leur alimentation. Pour prévenir des cas d'utilisation urgente en cas de coupure de l'alimentation, certaines versions sont proposées avec une commande manuelle de secours. L'actionneur combine alors les fonctions automatiques et manuelles.

Pour le fonctionnement de l'actionneur, il est préférable que celui-ci connaisse la position de déploiement du store, afin de gérer notamment les fonctionnements particuliers sur différentes zones de la course : arrivée au point haut, arrivée au point bas, zone de verrouillage des bras de déploiement du store.

Dans l'état de l'art, différentes solutions de détermination de position par comptage existent, celles-ci se répartissant principalement entre des dispositifs de comptage électroniques ou mécaniques.

Dans les produits existants, une telle position est couramment déterminée grâce à un dispositif de comptage mécanique. Un mouvement de l'écran est transcrit mécaniquement par le dispositif de comptage dans un sens ou dans l'autre. Le réglage des positions de fin de course nécessite généralement un accès à l'actionneur. Ensuite, quelle que soit l'origine du mouvement (motorisé ou manuel), le comptage est actif et les positions sont toujours bien repérées.

Des dispositifs de comptage électronique sont également largement présents sur le marché. Ceux-ci fonctionnent notamment par incrémentation/décrémentation d'un compteur qui représente la position courante. La position courante est repérée dans une mémoire électronique non volatile, ce qui permet de conserver l'information même en cas de coupure de courant. Le réglage d'un tel dispositif de comptage électronique peut être exécuté à distance, ce qui présente évidemment de nombreux avantages, les actionneurs n'étant pas aisément accessibles une fois montés sur site.

Cependant, notamment lorsque de tels actionneurs à dispositif de comptage électronique sont munis d'une commande manuelle de secours, un mouvement manuel réalisé lors d'une coupure de courant peut dérégler le comptage de position : en effet, le store est déplacé sans que le système de comptage électronique ne change la valeur de la position courante. Il est également peu probable que le store soit remis en position initiale après cette manoeuvre manuelle. La position en mémoire ne correspond donc plus à la position courante, autrement dit l'installation est déréglée.

Une pratique simple consiste à détecter les interruptions de courant ou l'activation de la manoeuvre manuelle et à recaler le système vers une butée (s'il en existe une) lorsque nécessaire, c'est à dire occasionnellement et/ou de manière automatique.

Alternativement, sans nécessairement la mise en place d'une commande de secours manuelle, des dérives dans le comptage peuvent survenir, auquel cas, il est également nécessaire de procéder à des recalages réguliers.

Ce recalage est basé sur la reconnaissance d'une position fixe, telle qu'une butée franche. La position de cette butée franche peut être déterminée par l'analyse du couple ou d'une variation du couple exercé par le moteur ou d'une sous-vitesse. Ces paramètres sont alors indépendants du comptage de position. La position de la butée est associée à une valeur de position de référence. Le comptage peut alors être remis à jour à partir de cette position de référence représentant sans ambiguïté la position courante du store.

La reconnaissance d'une telle butée est connue de l'homme du métier. Ainsi, le brevet EP 1 269 596 décrit un dispositif pour arrêter le moteur lorsque la charge sur le moteur dépasse une valeur déterminée. Il comprend des moyens de transformation de la variation de la tension aux bornes d'un condensateur de déphasage, correspondant à une variation de couple déterminée, en une variation choisie de la tension quel que soit le couple maximum développé, des moyens de comparaison de la tension transformée avec une tension de référence et des moyens d'arrêt du moteur lorsque la tension transformée est inférieure à la tension de référence.

On connaît par ailleurs de nombreux documents décrivant des éléments déplaçables entre deux positions de fin de course, une ou les deux fins de courses étant choisies décalées par rapport à des butées franches délimitant de manière précise la course maximum de l'élément mobile. Ce décalage est prévu pour éviter que l'élément mobile ne vienne taper de manière systématique à chaque cycle de fonctionnement, contre la ou les butées. Par exemple, la demande EP 0 905 592 décrit un procédé de réglage des positions de fin de course d'une porte dans lequel, suite à la reconnaissance automatique d'une butée, l'installateur décale volontairement la porte d'une certaine distance, et enregistre la nouvelle position comme position de fin de course.

Par ailleurs, le document DE 42 00 092 décrit un procédé de manoeuvre d'un portail coulissant. Lors du réglage, le portail est déplacé sous contrôle manuel entre deux piliers formant butée afin de mesurer le trajet dans les deux sens. En fonctionnement, le trajet réellement effectué est plus court que le trajet mesuré entre les deux piliers, pour également éviter que l'élément mobile ne vienne taper de manière systématique à chaque cycle de fonctionnement, contre la ou les butées.

Par ailleurs, on connaît également du document WO 03/050629, un procédé de réglage d'un volet roulant dans lequel, après la détermination de deux positions, un écran est conduit au-delà d'une des positions enregistrées, en particulier au-delà de la position basse. Cette dernière étape a pour but de venir analyser le lien cinématique entre l'actionneur et l'écran mobile. En effet, si une butée est rencontrée, le lien est déterminé comme étant de type "verrou" sur lequel il est nécessaire d'exercer une contrainte mécanique. Si aucune butée n'est détectée, le mouvement est stoppé lorsqu'une position prédéterminée est atteinte, le lien de type "clinquant" ou "sangle" n'autorisant pas de dépasser la position basse significativement.

Bien que le procédé soit séduisant, il n'offre pas de solution en termes de recalage dans le cas exposé ci-dessous.

Pour différents types de stores, il n'existe pas de butée franche. C'est notamment le cas des stores bannes à bras de déploiement, pour lesquels la position de repli maximum des bras de déploiement est uniquement une position dans laquelle le mouvement est progressivement entravé. Il s'agit en fait d'une position, que l'on peut alors assimiler à une butée, dans laquelle il n'est plus possible de poursuivre l'effort exercé pour entraîner un mouvement sans risque d'endommager l'installation.

En effet, on souhaite éviter d'arriver dans cette position sans prendre des précautions particulières, telles que notamment réduire le couple fourni par l'actionneur ou la vitesse d'approche.

Cette position correspond à un enroulement complet de la toile du store. Cependant, lors de l'installation et du réglage d'un tel store, la position de fin de course est réglée manuellement et ne correspond pas à cette position assimilée à une butée.

Ainsi, il n'existe pas de position de référence dépendante uniquement de l'installation et permettant un recalage lors d'un déréglage du dispositif de comptage.

On connaît du document EP 0 770 757 un procédé de fonctionnement d'un store motorisé, comprenant une procédure de réglage/mise à jour d'une position de fin de course, dans laquelle on vient tester une butée de fin de course.

Le but de l'invention est de fournir un procédé de réglage remédiant aux inconvénients évoqués précédemment et améliorant les procédés de réglage connus de l'art antérieur. En particulier, l'invention permet de fournir un procédé de réglage d'une installation de protection solaire motorisée comprenant un actionneur muni d'un dispositif de comptage électronique et permet un recalage de cette installation lorsque cela est nécessaire, sans intervention de l'utilisateur, et sans erreur. Le procédé selon l'invention permet ainsi également d'utiliser des seuils de détection assez bas pour ne pas endommager l'installation lors d'une détection de butée ou de position assimilée à une butée. L'invention permet également de s'adapter à différentes procédures existantes de réglage d'une installation, sans contraindre à un changement des habitudes d'un installateur.

Selon l'invention, le procédé de réglage selon l'invention est défini par la revendication 1.

Différents modes d'exécution sont définis par les revendications dépendantes 2 à 5.

Selon l'invention, le procédé de fonctionnement selon l'invention est défini par la revendication 6.

Différents modes d'exécution sont définis par les revendications dépendantes 7 et 8.

Selon l'invention, un actionneur électromécanique comprend des moyens matériels et des moyens logiciels de mise en oeuvre du procédé de réglage défini précédemment et/ou de mise en oeuvre du procédé de fonctionnement défini précédemment.

Selon l'invention, une installation de protection solaire comprend un actionneur défini précédemment.

Le dessin annexé représente, à titre d'exemple, un mode de réalisation d'une installation domotique selon l'invention et un mode d'exécution d'un procédé de réglage selon l'invention.
La figure 1 est un schéma d'une installation de protection solaire selon l'invention.
La figure 2 est un schéma d'un actionneur d'une telle installation.
Les figures 3 et 4 sont des ordinogrammes illustrant un mode d'exécution du procédé de réglage selon l'invention.
La figure 5 est un ordinogramme illustrant un mode d'exécution du procédé de fonctionnement selon l'invention.

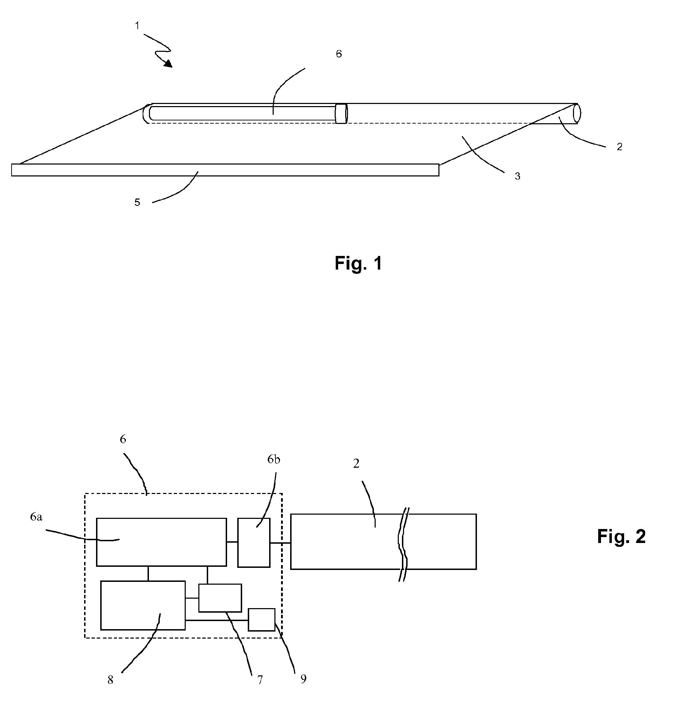

L'installation de protection solaire 1 représentée en figures 1 et 2 comprend un tube d'enroulement 2 autour duquel vient s'enrouler une toile de store 3. L'installation comprend également des bras (non représentés) articulés montés d'une part, à une première extrémité, sur une structure porteuse. L'autre extrémité des bras est reliée à une barre 5 fixée en bout de la toile. Un actionneur tubulaire 6 inséré dans le tube d'enroulement provoque la rotation de ce dernier. L'actionneur comprend une unité de commande 8 lui permettant de gérer des ordres de commande pour déployer ou replier la toile. Lors d'un ordre de déploiement, l'actionneur autorise un dépliement des bras sous l'action de ressorts et une rotation du tube d'enroulement dans un premier sens, ce qui entraîne un déploiement de la toile. A l'inverse, lors d'un ordre de repli, l'actionneur provoque la rotation du tube d'enroulement dans le sens inverse, ce qui a pour effet de tendre la toile et de replier les bras en plaçant les ressorts sous contrainte.

L'actionneur 6 comporte une partie d'entraînement ou moto-réducteur 6a ainsi qu'un frein 6b. Le frein est apte à bloquer en rotation l'axe de sortie, afin de réguler la vitesse de rotation et également de maintenir bloqué le tube d'enroulement.

L'actionneur comprend également un dispositif de comptage 7 d'une position de rotation de l'actionneur, correspondant à une position de déploiement de la toile. Le dispositif de comptage est du type électronique. Il permet d'associer des valeurs de compteur à des positions de l'écran.

L'actionneur comprend encore des moyens de détection de butée 9. Ces moyens peuvent par exemple fonctionner par détection d'un couple prédéterminé, d'une variation de couple ou détection d'une variation de vitesse prédéterminée. Le couple mesuré peut par exemple être celui exercé par l'actionneur 6 sur le tube 2 d'entraînement de la toile.

L'unité électronique de commande 8 permet la gestion des ordres de commande de rotation du tube d'enroulement dans un sens ou dans l'autre, ainsi que la gestion des arrêts, grâce notamment aux informations fournies par le dispositif de comptage 7 et les moyens de détection de butée 9. L'unité de commande comprend encore des moyens logiciels, tels que des programmes informatiques de mise en oeuvre d'un procédé de fonctionnement selon l'invention, ce procédé régissant le fonctionnement d'un actionneur de store à bras.

En particulier, l'actionneur comprend un dispositif de comptage électronique de position, des moyens de détection d'une entrave au mouvement, des moyens d'enregistrement d'une première position de fin de course, des moyens de déplacement de l'écran par activation de l'actionneur au-delà de la première position de fin de course enregistrée jusqu'à une position assimilable à une butée, détectée par les moyens de détection d'une entrave au mouvement, des moyens de mesure de l'écart de position entre la première position de fin de course enregistrée et la position assimilable à une butée et des moyens de mise en mémoire de cette mesure.

L'actionneur peut aussi comprendre un moyen d'utilisation d'une donnée de position courante de l'écran et de la valeur de l'écart, mise en mémoire lors d'une phase de réglage de l'installation, pour redéfinir une première position de fin de course.

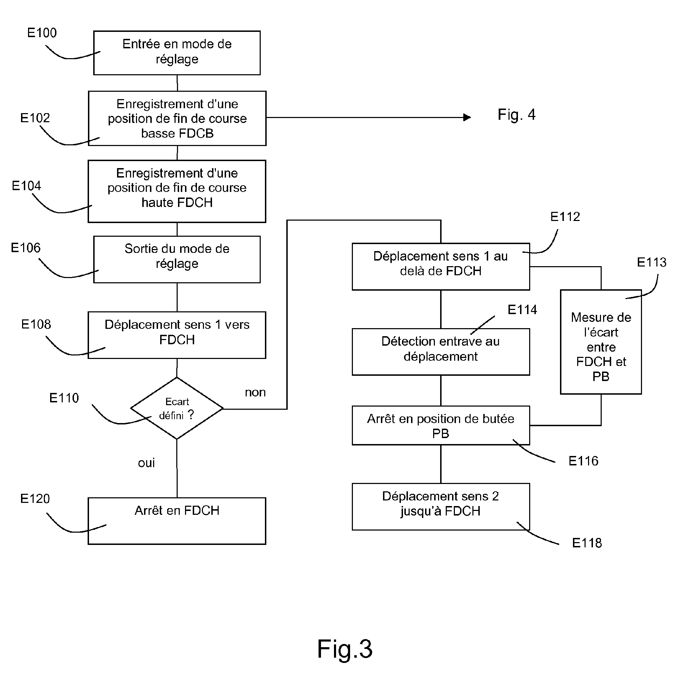

La figure 3 illustre différentes étapes d'un mode d'exécution du procédé de réglage selon l'invention. Une étape E100 comprend une entrée en mode de réglage. Celle-ci peut être réalisée par une action utilisateur telle qu'une séquence d'appuis particuliers sur un émetteur communiquant avec le récepteur, ou une fréquence de coupure de l'alimentation de l'actionneur particulière et reconnaissable. L'actionneur attend alors différentes actions de réglage. Chaque nouvelle étape de réglage est validée suivant un schéma établi connu de l'homme du métier. Au cours d'une étape E102, l'installateur déplace, en activant l'actionneur, la toile du store vers une position qu'il souhaite définir comme position de fin de course. La validation de cette étape E102 consiste en l'enregistrement de la position courante comme une position de référence du dispositif de comptage. Cette position est par exemple la position qu'il définit comme la position de fin de course basse FDCB, la toile étant alors sensiblement complètement déroulée et tendue.

A partir de cette position de fin de course basse, l'installateur commande un repli de la toile vers une position choisie de fin de course haute du store, dans laquelle la toile est sensiblement complètement enroulée. La validation de cette étape E104 consiste à enregistrer la position courante atteinte choisie par l'installateur comme position de fin de course haute FDCH. Cette position FDCH peut également être une position de référence pour le dispositif de comptage.

Préférentiellement, cette position FDCH n'est pas enregistrée si elle se situe à l'endroit d'une butée (ou une position assimilable à une butée) détectée par les moyens de détection d'une entrave au mouvement. L'installateur doit alors répéter la manoeuvre d'enregistrement de la position de fin de course.

Inversement, la position de fin de course basse FDCB peut être enregistrée avant la position de fin de course haute FDCH.

L'étape E106 suivante est une sortie de ce mode de réglage manuel, c'est-à-dire une sortie du mode dans lequel l'installateur intervient, les étapes suivantes pouvant être exécutées automatiquement.

Suite à l'étape E106, un premier déplacement dans un premier sens vers la position de fin de course haute au cours d'une étape E108 est suivi d'une étape dans laquelle il est vérifié qu'une mesure d'écart est en mémoire (étape E110).

Cette étape est facultative et pourrait être remplacée par une systématisation: le premier déplacement vers la fin de course haute serait systématiquement suivi des étapes E112 à E118.

Cette étape pourrait également être remplacée par un compteur pour effectuer cette manoeuvre d'apprentissage au cours du premier cycle après le mode de réglage puis la réitérer régulièrement, par exemple tous les 200 cycles.

Si une mesure d'écart doit être réalisée, l'actionneur poursuit le mouvement au cours d'une étape E112 au-delà de la position de fin de course haute enregistrée au cours de l'étape E102 et ce jusqu'à l'arrivée dans une position dans laquelle le mouvement est entravé (étape E114). Cette particularité physique est détectée par les moyens de détection 9 avec par exemple un réglage de sensibilité élevé. L'actionneur stoppe alors dans la position courante (étape E116).

A partir de l'étape E112 et jusqu'à la détection d'entrave et l'arrêt du moteur, la distance de déplacement est mesurée (étape E113). Le seuil de sensibilité peut être éventuellement réglable, mais sa valeur est alors enregistrée et liée à la mesure de distance. Cette distance de déplacement ou écart mesuré peut être une valeur négative, si la première position de fin de course est une position de référence égale à zéro.

Après l'étape E116, dans une étape E118, l'actionneur conduit de nouveau le store dans la position haute enregistrée au cours de l'étape E102, terminant ainsi le procédé de réglage du store sans butée haute. L'écart pourrait également être mesuré lors de ce dernier déplacement.

Si aucune mesure d'écart n'est nécessaire, l'actionneur stoppe le store dans la position de fin de course enregistrée au cours de l'étape E102 (étape E120).

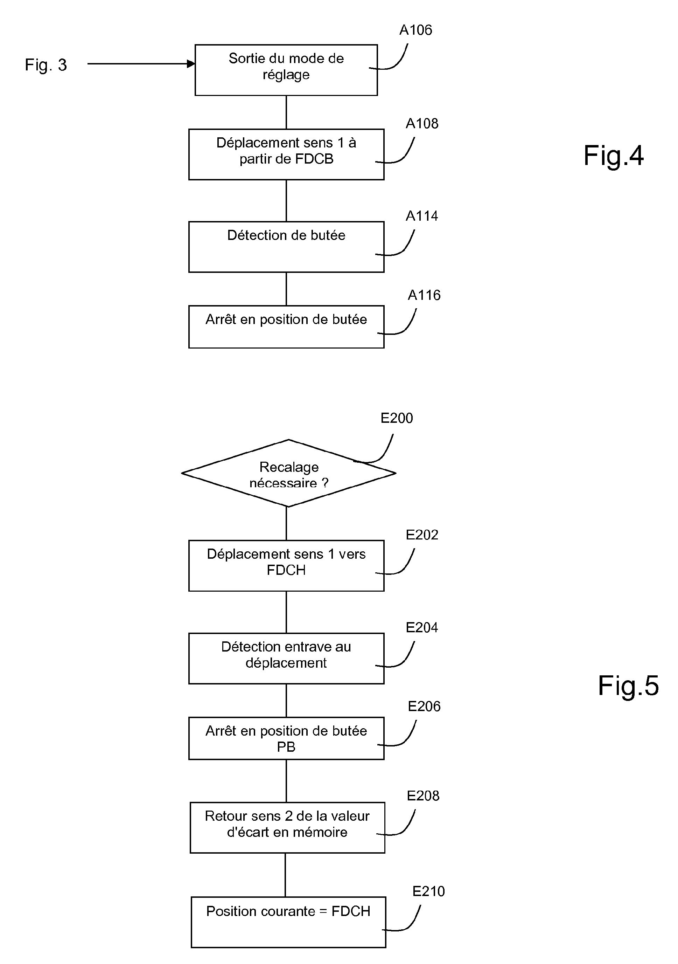

Si la sortie du mode réglage intervient après un seul enregistrement de fin de course, notamment la fin de course basse, un procédé alternatif s'applique, correspondant à l'état de l'art et décrit dans la figure 4. L'étape correspondant à l'étape E106 est alors notée A106. Il est important de noter que l'actionneur lui-même décide quel procédé s'applique à partir de ces étapes E106/A106.

Au cours de ce procédé alternatif, lors d'un déplacement de la toile sous l'effet de l'actionneur (étape A 108), l'arrêt du déplacement est commandé sous l'action des moyens de détection de butée 9 (étapes A114 et A116).

La figure 5 montre un mode d'exécution du procédé de fonctionnement de l'installation lors d'un recalage. Si un tel recalage est nécessaire suivant les conditions évoquées plus haut (étape E200), une étape E202 de déplacement dans le sens de recalage est mise en oeuvre, par exemple vers une position haute ou position repliée. Lorsqu'à l'étape E204 une entrave au mouvement est détectée, sensiblement dans les mêmes conditions que la détection lors de l'étape E114 de réglage, le mouvement est stoppé (étape E206). Au cours d'une étape E208, l'actionneur pilote alors l'écran dans le sens inverse sur une distance égale à l'écart mesuré lors du réglage au cours de l'étape E113. La nouvelle position atteinte est alors équivalente à la position de fin de course enregistrée lors du réglage (étape E210). Une valeur correspondant à la nouvelle position atteinte est alors stockée dans une mémoire de l'actionneur, elle détermine la nouvelle position de fin de course haute.

Alternativement, la valeur déterminant la nouvelle position de fin de course haute peut être déterminée juste après l'étape E206 dans laquelle on détermine la position courante de l'écran. Il suffit alors d'ajouter (au sens algébrique) la valeur d'écart mesurée lors du réglage au cours de l'étape E113 à la valeur donnée par le dispositif de comptage et déterminant la position courante de l'écran.

Le procédé selon l'invention peut s'appliquer de la même manière à une position de fin de course basse, ou position repliée, si des moyens sont disponibles pour reconnaître une caractéristique physique de position de fin de course qui permettre à cette position d'être assimilée à une butée.

L'intérêt de chercher une position assimilable à une butée une fois la position de fin de course enregistrée est de pouvoir adapter les caractéristiques de la détection de butée à la position. Au-delà de la position de fin de course enregistrée, des mesures sont mises en place pour éviter tout choc ou contrainte élevée dans la position assimilable à une butée. Ainsi, la sensibilité de la détection de butée est plus élevée, le couple est réduit et/ou la vitesse de déplacement est réduite.

Dans le cas d'une procédure de recalage, des mesures similaires pourront être mises en place sur une partie de la course avant l'arrivée dans la position assimilable à une butée.

Ce procédé offre également l'avantage de pouvoir être effectué en plusieurs étapes. L'enregistrement des positions de fin de course peut avoir lieu en usine, tandis que l'étape d'apprentissage de l'écart entre la position assimilée à une butée et la position de fin de course enregistrée peut avoir lieu une fois le produit installé sur site, voire sur plusieurs cycles après l'installation. Ces deux phases peuvent donc être séparées dans l'espace et dans le temps.

L'ergonomie de réglage peut être prévue dans un actionneur compatible avec des stores à butée haute (stores cassette) et des stores à butée basse. En effet, l'ergonomie de réglage définit s'il est besoin de recourir au procédé selon l'invention : pour un store cassette, seule une position de fin de course est enregistrée, correspondant à la position de fin de course basse. L'installateur signale ensuite la fin de la procédure de réglage. Pour un store banne, deux positions de fin de course sont enregistrées, et l'installateur signale ensuite la fin de la procédure de réglage. La procédure de réglage selon l'invention sera alors mise en oeuvre uniquement dans le deuxième cas, de manière automatique, sans nécessiter de nouvelle intervention de l'installateur.

Si le procédé de réglage utilisé était celui décrit dans le brevet EP 0 905 592, l'installateur serait obligé de réaliser le décalage manuellement, avant la sortie du mode de réglage. Autrement en effet, il n'est fait aucune distinction entre un enregistrement d'une seule fin de course, l'autre étant définie par la détection de butée dans le cas du store cassette et l'enregistrement de la fin de course basse et la détection de la position assimilée à une butée dans le cas du store banne.

Par ailleurs, l'invention permet, contrairement au cas du brevet EP 0 905 592, de définir automatiquement lors du réglage une zone d'accostage avant d'atteindre la position de référence physique.

L'invention offre donc ces avantages d'automatisation du procédé de réglage, tout en assurant la protection de l'installation.

## Revendications

1. Procédé de réglage d'une installation (1) de protection solaire motorisée comprenant un écran (3) déplaçable par activation d'un actionneur (6) muni d'un dispositif (7) de comptage électronique de position et de moyens (9) de détection d'une entrave au mouvement, **caractérisé par** les étapes suivantes :
a. enregistrement d'une première position de fin de course,
b. déplacement de l'écran par activation de l'actionneur vers la première position de fin de course enregistrée, poursuivi au-delà de la première position de fin de course enregistrée jusqu'à une position assimilable à une butée, détectée par les moyens de détection d'une entrave au mouvement,
c. mesure de l'écart de position entre la première position de fin de course enregistrée et la position assimilable à une butée,
d. mise en mémoire de cette mesure.

2. Procédé de réglage selon la revendication 1, **caractérisé en ce que** le déplacement de l'écran est réalisé suite à un ordre donné manuellement ou automatiquement suite à une entrée dans un cycle automatique de réglage.

3. Procédé de réglage selon l'une des revendications précédentes, **caractérisé en ce qu'**il comprend en outre l'étape suivante :
e. enregistrement d'une deuxième position de fin de course.

4. Procédé de réglage selon l'une des revendications précédentes, **caractérisé en ce que** s'il comprend une étape de sortie d'un mode de réglage après l'enregistrement de la première position de fin de course, les étapes b, c et d ne sont alors pas exécutées.

5. Procédé de réglage selon l'une des revendications 1 à 3, **caractérisé en ce qu'**il comprend ultérieurement l'étape suivante :
f. déplacement vers la première position de fin de course.

6. Procédé de fonctionnement d'une installation de protection solaire motorisée comprenant un écran (3) déplaçable par activation d'un actionneur (6) muni d'un dispositif (7) de comptage électronique de position et de moyens (9) de détection d'une entrave au mouvement, **caractérisé en ce qu'**il comprend, dans une phase de recalage de l'installation, les étapes suivantes :
- déplacement de l'écran dans un premier sens, par activation de l'actionneur, jusqu'à une position assimilable à une butée,
- utilisation d'une donnée de position courante de l'écran et de la valeur de l'écart, mise en mémoire lors d'une phase de réglage de l'installation suivant le procédé de réglage selon l'une des revendications précédentes, pour redéfinir une première position de fin de course.

7. Procédé de fonctionnement selon la revendication 6, **caractérisé en ce que** l'étape d'utilisation de données comprend les sous-étapes suivantes :
- déplacement de l'écran dans un deuxième sens, par activation de l'actionneur, d'une valeur déterminée par la valeur de l'écart mise en mémoire lors d'une phase de réglage de l'installation suivant le procédé de réglage selon l'une des revendications 1 à 5,
- utilisation d'une donnée de position courante de l'écran pour redéfinir une première position de fin de course.

8. Procédé de fonctionnement selon la revendication 6, **caractérisé en ce que** l'étape d'utilisation de données comprend la sous-étape suivante :
- addition de la donnée de position courante de l'écran et de la valeur de l'écart mise en mémoire lors d'une phase de réglage de l'installation suivant le procédé de réglage selon l'une des revendications 1 à 5.

9. Actionneur électromécanique (6) comprenant des moyens matériels (6a, 6b, 7, 8, 9) et des moyens logiciels de mise en oeuvre du procédé de réglage selon l'une des revendications 1 à 4 et/ou de mise en oeuvre du procédé de fonctionnement selon l'une des revendications 6 à 8.

10. Installation de protection solaire (1) comprenant un actionneur (6) selon la revendication 9.

## Patentansprüche

1. Einstellverfahren einer motorisierten Sonnenschutzanlage (1), die einen durch Aktivierung eines Aktuators (6) verlagerbaren, mit einer elektronischen Positionszählvorrichtung (7) und Detektionsmitteln (9) eines Bewegungshemmnisses ausgestatteten Schirm (3) umfasst, das durch die folgenden Schritte gekennzeichnet ist:
a. Registrieren einer ersten Endlagenposition,
b. Verlagern des Schirms durch Aktivierung des Aktuators bis zur registrierten ersten Endlagenposition, das jenseits der ersten registrierten Endlagenposition bis zu einer mit einem Anschlag vergleichbaren Position fortgesetzt wird, die von den Detektionsmitteln eines Bewegungshemmnisses festgestellt wird,
c. Messen des Positionsabstands zwischen der registrierten ersten Endlagenposition und der mit einem Anschlag vergleichbaren Position,
d. Speichern dieser Messung.

2. Einstellverfahren nach Anspruch 1, **dadurch gekennzeichnet, dass** die Verlagerung des Schirms infolge eines manuell oder automatisch gegebenen Befehls infolge einer Eingabe in einen automatischen Regelungszyklus durchgeführt wird.

3. Einstellverfahren nach einem der vorangehenden Ansprüche, **dadurch gekennzeichnet, dass** es ferner den folgenden Schritt umfasst:
e. Registrieren einer zweiten Endlagenposition.

4. Einstellverfahren nach einem der vorangehenden Ansprüche, **dadurch gekennzeichnet, dass** es nach Registrierung der ersten Endlagenposition einen Ausgangsschritt aus einem Regelungsmodus umfasst, wobei die Schritte b, c und d dann nicht durchgeführt werden.

5. Einstellverfahren nach einem der Ansprüche 1 bis 3, **dadurch gekennzeichnet, dass** es später den folgenden Schritt umfasst:
f. Verlagern zur ersten Endlagenposition.

6. Funktionsverfahren einer motorisierten Sonnenschutzanlage, die einen durch Aktivierung eines Aktuators (6) verlagerbaren, mit einer elektronischen Positionszählvorrichtung (7) und Detektionsmitteln (9) eines Bewegungshemmnisses ausgestatteten Schirm (3) umfasst, **dadurch gekennzeichnet, dass** es in einer Regelungsphase der Anlage die folgenden Schritte umfasst:
- Verlagern des Schirms durch Aktivierung des Aktuators in eine erste Richtung bis zu einer mit einem Anschlag vergleichbaren Position,
- Verwenden einer laufenden Positionsangabe des Schirms und des während einer Regelungsphase der Anlage gemäß dem Einstellverfahren nach einem der vorangehenden Ansprüche gespeicherten Abstandswerts zur Neufestlegung einer ersten Endlagenposition.

7. Funktionsverfahren nach Anspruch 6, **dadurch gekennzeichnet, dass** der Datenverwendungsschritt die folgenden Unterschritte umfasst:
- Verlagern des Schirms durch Aktivierung des Aktuators um einen durch den während einer Regelungsphase der Anlage gemäß dem Einstellverfahren nach einem der Ansprüche 1 bis 5 gespeicherten Abstandswert bestimmten Wert in eine zweite Richtung,
- Verwenden einer laufenden Positionsangabe des Schirms zur Neufestlegung einer ersten Endlagenposition.

8. Funktionsverfahren nach Anspruch 6, **dadurch gekennzeichnet, dass** der Datenverwendungsschritt den folgenden Unterschritt umfasst:
- Addition der Angabe der laufenden Position des Schirms und des während einer Regelungsphase der Anlage gemäß dem Einstellverfahren nach einem der Ansprüche 1 bis 5 gespeicherten Abstandswerts.

9. Elektromechanischer Aktuator (6), der Hardwaremittel (6a, 6b, 7, 8, 9) und Softwaremittel für die Umsetzung des Einstellverfahrens nach einem der Ansprüche 1 bis 4 und/oder die Umsetzung des Funktionsverfahrens nach einem der Ansprüche 6 bis 8 umfasst.

10. Sonnenschutzanlage (1), die einen Aktuator (6) nach Anspruch 9 umfasst.

## Claims

1. A method of adjusting a motorized solar protection installation (1) comprising a screen (3) that can be displaced by activation of an actuator (6) provided with an electronic position counting device (7) and means (9) of detecting an obstacle to the movement, **characterized by** the following steps:
a. storage of a first end-of-travel position,
b. displacement of the screen by activation of the actuator towards the first stored end-of-travel position, continued beyond the first stored end-of-travel position as far as a position that can be assimilated to an end-stop, detected by the means of detecting an obstacle to the movement,
c. measurement of the position difference between the first stored end-of-travel position and the position that can be assimilated to an end-stop,
d. storage of this measurement in memory.

2. The adjustment method as claimed in claim 1, wherein the displacement of the screen is performed following a command given manually or automatically after entering into an automatic adjustment cycle.

3. The adjustment method as claimed in one of the preceding claims, which also comprises the following step:
e. storage of a second end-of-travel position.

4. The adjustment method as claimed in one of the preceding claims, wherein, if it includes a step for exiting from an adjustment mode after storage of the first end-of-travel position, the steps b, c and d are not then carried out.

5. The adjustment method as claimed in one of claims 1 to 3, which lastly comprises the following step:
f. displacement to the first end-of-travel position.

6. A method of operating a motorized solar protection installation comprising a screen (3) that can be displaced by activation of an actuator (6) provided with an electronic position counting device (7) and means (9) of detecting an obstacle to the movement, which comprises, in an installation recalibration phase, the following steps:
- displacement of the screen in a first direction, by activation of the actuator, as far as a position that can be assimilated to an end-stop,
- use of a current position datum of the screen and of the difference value, stored in memory in an installation adjustment phase according to the adjustment method as claimed in one of the preceding claims, to redefine a first end-of-travel position.

7. The operating method as claimed in claim 6, wherein the data usage step comprises the following substeps:
- displacement of the screen in a second direction, by activation of the actuator, by a value determined by the difference value stored in memory in an installation adjustment phase according to the adjustment method as claimed in one of claims 1 to 5,
- use of a current position datum of the screen to redefine a first end-of-travel position.

8. The operating method as claimed in claim 6, wherein the data usage step comprises the following substep:
- addition of the current position datum of the screen and of the difference value stored in memory in an installation adjustment phase according to the adjustment method as claimed in one of claims 1 to 5.

9. An electromechanical actuator (6) comprising hardware means (6a, 6b, 7, 8, 9) and software means for implementing the adjustment method as claimed in one of claims 1 to 4 and/or for implementing the operating method as claimed in one of claims 6 to 8.

10. A solar protection installation (1) comprising an actuator (6) as claimed in claim 9.
